(19) Europäisches Patentamt
European Patent Office
Office européen des brevets

(11) Veröffentlichungsnummer: **0 234 416 B1**

(12) # EUROPÄISCHE PATENTSCHRIFT

(45) Veröffentlichungstag der Patentschrift: **28.08.91**

(51) Int. Cl.$^5$: **C08F 2/24**

(21) Anmeldenummer: **87101922.0**

(22) Anmeldetag: **11.02.87**

(54) **Zitronensäurederivate als Emulgatoren für die Emulsionspolymerisation.**

(30) Priorität: **22.02.86 DE 3605799**

(43) Veröffentlichungstag der Anmeldung:
**02.09.87 Patentblatt 87/36**

(45) Bekanntmachung des Hinweises auf die Patenterteilung:
**28.08.91 Patentblatt 91/35**

(84) Benannte Vertragsstaaten:
**DE ES FR GB IT**

(56) Entgegenhaltungen:
**EP-A- 0 036 624**
**DE-B- 1 224 497**
**DE-B- 1 228 736**

(73) Patentinhaber: **BAYER AG**
**W-5090 Leverkusen 1 Bayerwerk(DE)**

(72) Erfinder: **Hendricks, Udo Winfried, Dr.**
**Am Höhenfeld 12**
**W-5068 Odenthal(DE)**
Erfinder: **Schmidt, Adolf, Dr.**
**Roggendorfstrasse 67**
**W-5000 Köln 80(DE)**

**EP 0 234 416 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Polymerisatdispersionen mit Teilchendurchmessern von 50 bis 1000 nm, das dadurch gekennzeichnet ist, daß als Emulgatoren bei der Emulsionspolymerisation Zitronensäurederivate der allgemeinen Formel (I)

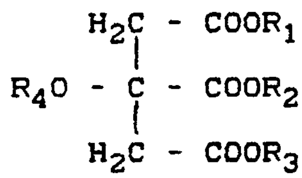

(I)

mit

$R_1$, $R_2$, $R_3$: $C_6$.$C_{20}$-Alkyl, Wasserstoff, Natrium, Kalium, Lithium, Ammonium, mindestens einer der Reste $R_1$, $R_2$, $R_3$ aber $C_6$-$C_{20}$-Alkyl

$R_4$: Wasserstoff, Acetyl

verwendet werden und wasserlösliche Radikalbildner oder Redox-Systeme mit zumindest einer wasserlöslichen Komponente als Initiatoren.

Aus der DE-AS 1 228 736 ist es bekannt, Zitronensäureester, in denen mindestens eine Carboxylgruppe verestert ist und mindestens eine weitere Carboxylgruppe als freie Säure vorliegt, als das Absetzen von Pigmenten verhinderndes Additiv in Öl- und Lackanstrichen zu verwenden.

Aus der DE-AS 1 224 497 ist es bekannt, Polyvinylchlorid oder Vinylchlorid-Mischpolymerisate in wäßriger Suspension herzustellen unter Verwendung monomerlöslicher Katalysatoren und Teilestern aliphatischer Polycarbonsäuren mit langkettigen aliphatischen Alkoholen mit 6 bix 20 C-Atomen, wobei mindestens eine Carboxylgruppe unverestert bleiben soll.

Ferner beansprucht die DE-AS 1 295 815 Zitronensäureester als Suspensionshilfsmittel bei der Herstellung von Polyvinylchlorid oder vinylchloridhaltigen Mischpolymerisaten durch Suspensionspolymerisation.

Die EP-A 36 624 lehrt, daß Ester von Hydroxycarbonsäuren mit bis zu 6 C-Atomen in der Alkoholkomponente in Form ihrer wasserlöslichen Salze als Hilfsmittel bei der Suspensionspolymerisation von Vinylchlorid, gegebenenfalls in Kombination mit herkömmlichen Schutzkolloiden, eingesetzt werden können.

Es besteht ein Bedarf an Hilfsmitteln für die Emulsionspolymerisation, die es gestatten, insbesondere Latices mit mittleren Teilchendurchmessern von 200 - 500 nm durch einfache diskontinuierliche Polymerisation ohne Verwendung von Saatlatex und ohne Zudosierung herzustellen.

Kautschuk-Latices mit Teilchendurchmessern von ca. 200 bis 1000 nm können als Grundlagen zur Herstellung thermoplastischer Pfropfpolymerisate Verwendung finden. Bei Teilchendurchmessern > 150 nm lassen sich auch hochkonzentrierte Latices herstellen.

Bisher war die Meinung verbreitet, daß Verfahren zur Erzeugung eines hochkonzentrierten und grobteiligen Latex, die auf Modifikation der Emulgatoren beruhen, nur sehr bedingt tauglich sind (vgl. Houben Weyl, Methoden der organnischen Chemie, Bd. XIV, 1; Georg Thieme Verlag 1961, S. 336 ff).

Lediglich Emulgatoren auf Basis der dimeren Leinölsäure sollen die Herstellung grobteiliger und niedrigviskoser Butadien-Styrol-Copolymerisat-Latices ermöglichen.

Einer Firmenschrift der Unilever-Emery N.V. Gouda (NL): "Empol Dimer- und Trimersäuren, PSB 6911-0105 D, S. 20" ist zu entnehmen, daß die Pottascheseife der Dimersäure ein hochwirksamer Emulgator sei und die Herstellung "ungewöhnlich großer" Latexteilchen ermögliche.

Den Dimersäuren wird die Struktur (II) zugeschrieben.

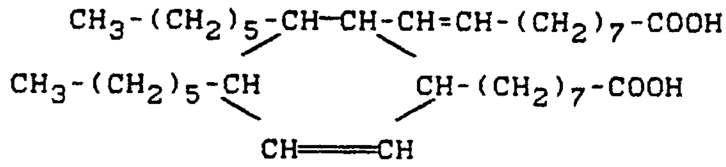

(II)

Es wurde nun gefunden, daß Alkylester der Zitronensäure und der O-Acetylzitronensäure deren nichtveresterte Säuregruppen auch als Alkalisalze vorliegen können als Emulgatoren bei der Emulsionspolymerisation radikalisch polymerisierbarer Verbindungen in Gegenwart wasserlöslicher, Radikale bildender Substanzen zur Herstellung wäßriger Polymerisatdispersionen gut geeignet sind, insbesondere zur Herstellung von Dispersionen (Latices) deren Teilchen mittlere Durchmesser von 50 - 1000 nm haben.

Aus Zitronensäure (III)

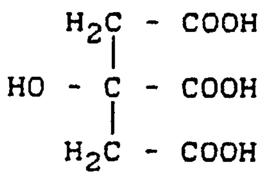

(III)

können bei der Umsetzung mit einem einwertigen Alkanol eine Vielzahl von Reaktionsprodukten nebeneinander entstehen.

Es war überraschend, daß sogar solche chemisch uneinheitliche Reaktionsprodukte der Zitronensäure und der O-Acetylzitronensäure beim Einsatz als Emulgator für die Emulsionspolymerisation grobteilige Dispersionen (Latices) mit enger Teilchendurchmesserverteilung herzustellen gestatten.

Die durch vollständige Veresterung der Zitronensäure oder O-Acetylzitronensäure erhältichen Triester mit $C_{7-20}$-Alkanolen, die geradkettig, verzweigt oder cycloaliphatisch sein können, sind in den radikalisch polymerisierbaren Verbindungen, d.h. den Monomeren gut löslich. Bei intensivem Rühren und bei alkalisch eingestellter kontinuierlicher Phase der Emulsion beobachtet man, insbesondere bei Temperaturen oberhalb 60 °C, nach einiger Zeit. eine verbesserte Emulgierung der Monomeren, die bei Anwesenheit entsprechender Initiatoren vom Einsetzen einer Polymerisationsreaktion begleitet wird. Bei diesem Verfahren (langsame Polymerisation) entstehen grobteilige Dispersionen mit Teilchendurchmessern bis zu 1000 nm.

Feinteiligere Polymerdispersionen entstehen, wenn als Emulgatoren Umsetzungsprodukte von 1 Mol Zitronensäure, Zitronensäureanhydrid oder O-Acetylzitronensäureanhydrid mit 2 Mol eines einwertigen Alkanols verwendet werden, die vorsichtig mit Natronlauge, Kalilauge, Lithiumhydroxidlösung oder sonstigen Basen neutralisiert worden sind. Sonstige Basen können Ammoniak, Amine, Aminoalkohole oder andere organische Stickstoffbasen sein. Bevorzugt werden Natronlauge, Kalilauge oder wäßrige Ammoniaklösung.

Solche Alkali- und Ammoniumsalze von sauren Zitronensäure-oder O-Acetylzitronensäureestern dienen bevorzugt zur Herstellung von Dispersionen (Latices) mit Teilchendurchmessern von 150 bis 500 nm.

Noch feinteiligere Dispersionen (Latices) entstehen, wenn als Emulgatoren Salze saurer Zitronensäure- oder O-Acetylzitronensäureester, die durch Umsetzen von 1 Mol Zitronensäure, Zitronensäureanhydrid oder O-Acetylzitronensäureanhydrid mit 1 Mol eines einwertigen Alkanols mit mindestens 10 C-Atomen erhalten werden, zur Polymerisation eingesetzt werden. Vorzugsweise werden $C_{10-18}$-Alkanole oder Mischungen von diesen eingesetzt. Die Alkanole können geradkettig, verzweigt oder cyclisch sein. Dabei werden die noch freien OH-Gruppen wie oben neutralisiert.

Die Herstellung von O-Acetylzitronensäureanhydrid aus Zitronensäure und Essigsäureanhydrid ist bekannt (z.B. GB-A 674 710), ebenso die Herstellung von Zitronensäureanhydrid (J. Pharm. Sci. 58, 505 (1969)).

Vorzugsweise setzt man die Zitronensäure selbst mit Alkanolen um.

Die Veresterung der Zitronensäure mit Alkanolen ist bekannt. Grundsätzlich ist es möglich, die Alkanole (Fettalkohole) auf die Zitronensäure unverdünnt einwirken zu lassen und das Reaktionswasser abzudestillieren.

Es ist auch möglich, die Veresterung unter azeotroper Entfernung des Wassers mit Hilfe eines

geeigneten Schleppers wie Toluol durchzuführen.

Als Katalysator kann z.B. Schwefelsäure, p-Toluolsulfonsäure, p-Dodecylbenzolsulfonsäure oder ein saures Ionenaustauscherharz verwendet werden. Die Reaktionsprodukte, die bei Temperaturen oberhalb 20 °C schmelzen, sind meist von wachsartiger Konsistenz. Ihre Neutralisation kann in wäßriger Emulsion bei erhöhter Temperatur vorgenommen werden, aber auch unter milden Bedingungen in einem geeigneten Lösungsmittel, wie z.B. Isopropanol gelöst, wonach das Lösungsmittel entfernt wird und der Emulgator als Paste zurückbleibt.

Besondere Vorteile der erfindungsgemäßen Emulgatoren sind neben der engen Größenverteilung der Latexteilchen ihre gute biologische Abbaubarkeit, ihre geringe Tendenz zur Schaumbildung und ihre gute physiologische Verträglichkeit.

Die erfindungsgemäßen Emulgatoren werden mit wasserlöslichen Radikalbildnern zur Emulsionspolymerisation eingesetzt. Geeignete wasserlösliche Radikalbildner sind beispielsweise Kalium-, Ammonium- und Natriumperoxodisulfat, Salze der Peressigsäure oder der Perpropionsäure, oder Kaliumperoxodiphosphat in Kombination mit Reduktionsmitteln, wie Sulfiten oder insbesondere auch wasserlöslichen Azoverbindungen mit nachfolgender Struktur:

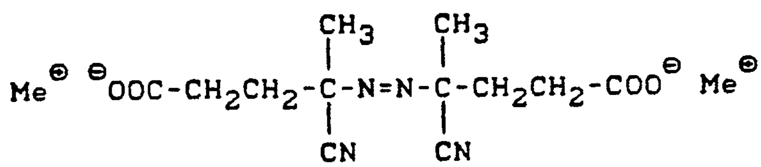 (IV)

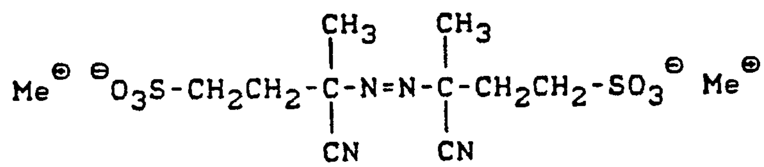 (V)

$Me^{\oplus} = Na^{\oplus}, K^{\oplus}, NH_4^{\oplus}.$

Die bereits durch die Verwendung wasserlöslicher Initiatoren erzielte weitgehende Einheitlichkeit in den Teilchendurchmessern kann weiter verbessert werden, wenn mit Kombinationen monomerlöslicher Peroxide hoher Stabilität wie Cumolhydroperoxid oder p-Menthanhydroperoxid und wasserlöslichen und stark reduzierenden Verbindung wie Natriumformaldehydsulfoxylat in Gegenwart von Schwermetallspuren, beispielsweise von Eisenkomplexonaten gearbeitet wird.

Es lassen sich auch monomerlösliche reduzierende Verbindungen in Kombination mit wasserlöslichen Peroxiden in Gegenwart von Schwermetallspuren als Initiatoren für die Emulsionspolymerisation mit den Zitronensäureemulgatoren einsetzen.

Die Polymerisation kann mit vollständig vorgelegtem Emulgator im Temperaturbereich von +5 bis +80 °C erfolgen. Ist eine Polymerisationstemperatur von >80 °C erwünscht, so ist es empfehlenswert, den Emulgator nicht vollständig vorzulegen, sondern die Hauptmenge während der Polymerisation nachzudosieren. Gleichzeitig sollte bei diesen extremen Temperaturen ein Zusatzemulgator, beispielsweise ein Alkylmonosulfonat mit einer mittleren Kettenlänge von 14 C-Atomen mitverwendet werden.

Radikalisch polymerisierbare Verbindungen (Monomere), die sich erfindungsgemäß in Gegenwart der Zitronensäurederivate als Emulgatoren polymerisieren lassen, sind beispielsweise Butadien, Isopren, Chloropren, Ethylen, Styrol, Methylacrylat, Ethylacrylat, n-Butylacrylat, Ethylhexylacrylat, Methylmethacrylat, Butylmethacrylat, Vinylacetat, Vinylpropionat, Vinylversat, in Kombination mit anderen Monomeren wie α-Methylstyrol, Acrylnitril und Methacrylnitril.

Bevorzugt ist Butadien, gegebenenfalls zusammen mit damit copolymerisierbaren Monomeren.

Neben den genannten Monomeren können in bekannter Weise zur Stabilisierung der organischen Kolloidteilchen die hierzu üblichen Hilfsmonomere einpolymerisiert werden. Diese Hilfsmonomere haben daneben auch die Funktion, bei filmbildenden Dispersionen die Haftung oder das Pigmentbindevermögen zu verbessern. Solche Hilfsmonomere sind beispielsweise Acrylsäure, Methacrylsäure, Acrylamid, Methacrylamid, Vinylsulfonsäure, Methallylsulfonsäure, Maleinsäure, Fumarsäure, Itaconsäure, Halbester der

Maleinsäure und deren Salze, Halbester der Itaconsäure und deren Salze. Die Hilfsmonomere werden gegebenenfalls in Mengen bis höchstens 6 Gew.-%, bezogen auf das Polymerisat, eingesetzt.

Zusätzlich zu den genannten Monomeren können vernetzergruppenhaltige in an sich bekannter Weise einpolymerisiert werden.

Die erfindungsgemäßen Emulgatoren können auch mit weiteren herkömmlichen anionischen Emulgatoren kombiniert werden.

Es ist auch möglich, Zitronensäure-Emulgatoren mit nichtionischen Emulgatoren zu kombinieren.

Erfindungsgemäß werden bevorzugt Polybutadien-Latices hergestellt und als Grundlage für die Pfropfung mit weiteren Monomeren verwendet.

Der Feststoffgehalt der Latices liegt üblicherweise zwischen 30 und 50 Gew.-%, jedoch ist es grundsätzlich auch möglich, erfindungsgemäß Latices mit Feststoffgehalten bis zu 60 Gew.-% herzustellen.

Die im folgenden angegebenen Prozentzahlen beziehen sich, wenn nicht ausdrücklich anders erwähnt, auf Gewichtsprozente.

Zur Bedeutung der zur Angabe der Teilchendurchmesser verwendeten Abkürzungen vgl. DIN 53 206.

## Beispiele

### Beispiel 1

Molares Verhältnis von Zitronensäure zu 2-Ethylhexanol-1 = 1:2

A) 210 Gew.-Tle Zitronensäurehydrat werden unter Stickstoffatmosphäre zusammen mit 260 Gew.-Tln 2-Ethylhexanol-1 auf 160 °C erhitzt, wobei das Wasser abdestilliert. Nach 2 Stunden ist die Wasserabspaltung beendet. Man erhält 408 Gew.-Tle einer gelben, viskosen Flüssigkeit mit einem Brechungsindex $n_D^{20}$ = 1.4605, einer Säurezahl von 156 mg KOH/g und einer Verseifungszahl von 412 mg KOH/g.

200 Gew.-Tle des auf diese Weise erhaltenen Estergemisches werden mit 65 Gew.-Tln Isopropanol vermischt und bei 40 bis 45 °C mit einem Gemisch aus 49,6 Gew.-Tln 45 %iger Natronlauge und 70 Gew.-Tln Wasser neutralisiert. Man erhält eine klare Lösung mit einem Trockengehalt von 56 Gew.-%. Das Isopropanol wird im Vakuum abdestilliert.

B) In einem Edelstahlrührautoklaven mit automatischer Temperaturregelung und Blattrührer (150 $min^{-1}$) werden unter Ausschluß von Luft-Sauerstoff eingebracht:

| | |
|---|---|
| Entionisiertes Wasser | 2.030,0 Gew.-Tle |
| 10 gew.-%ige Emulgatorlösung | 547,0 " |
| tert.-Dodecylmercaptan | 5,7 " |
| Butadien | 1.830,0 " |

Das Gemisch wird auf 65 °C aufgeheizt, wonach unter Beibehaltung dieser Temperatur 150 Gew.-Tle einer 2,5 gew.-%igen Kaliumpersulfatlösung zudosiert werden.

Der pH-Wert wird durch die gelegentliche Zugabe von verdünnter Natronlauge auf ca. 8,5 eingestellt. Nach 55 Stunden wird der Autoklav abgekühlt und entspannt, der Latex hat einen Feststoffgehalt von 37 Gew.-%.

Die Untersuchung des Latex (Ultrazentrifugenmessung) ergab folgende integrale Teilchendurchmesserverteilung mit Korrektur nach Mil:

| Massen (%) | D[nm] |
|---|---|
| 0 | 98 |
| 10 | 167 |
| 20 | 249 |
| 30 | 255 |
| 40 | 258 |
| 50 | 264 |
| 60 | 271 |
| 70 | 274 |
| 80 | 276 |
| 90 | 283 |
| 100 | 307 |

DAN: 196; DAF: 242; DAV: 254; DAV:DAN = 1,3.

Beispiel 2

Molares Verhältnis von Zitronensäure zu Docecanol-1 = 1:2.

A) 105 Gew.-Tle Zitronensäurehydrat werden mit 186 Gew.-Tln Dodecanol-1 unter einer Stickstoffatmosphäre auf 160 bis 170°C erhitzt, wobei innerhalb von 2 Stunden 22 Gew.-Tle Wasser abdestillieren. Anschließend wird noch 1 Stunde unter Vakuum (ca. 20 mbar) auf 140°C erhitzt.

Man erhält 264 Gew.-Tle eines bei Raumtemperatur festen Rückstands mit einem Schmelzbereich von 32 bis 40°C, einer Säurezahl von 103 mg KOH/g und einer Verseifungszahl von 324 mg KOH/g.

100 Gew.-Tle dieses Produktes werden in 30 Gew.-Tln Isopropanol gelöst und bei 40 bis 45°C mit 16,2 Gew.-Tln einer 45 %igen Natronlauge neutralisiert. Anschließend wird das Gemisch im Vakuum (ca. 20 mbar) bei 50°C eingedampft. Man erhält 52 Gew.-Tle des Zitronensäure-Emulgators in Form einer weißen Paste.

B) Unter Verwendung einer 10 gew.-%igen wäßrigen Lösung des unter 2A) hergestellten Emulgators wird analog Beispiel 1B) polymerisiert. Es resultiert ein Latex folgender Teilchendurchmesserverteilung:

| Massen (%) | D[nm] |
|---|---|
| 0 | 164 |
| 10 | 207 |
| 20 | 211 |
| 30 | 213 |
| 40 | 215 |
| 50 | 218 |
| 60 | 220 |
| 70 | 224 |
| 80 | 230 |
| 90 | 266 |
| 100 | 1039 |

DAN: 163; DAF: 230; DAV: 243; DAV:DAN = 1,5.

Beispiel 3

A) Zitronensäure-Emulgator, hergestellt aus 1 Mol Zitronensäure und 2 Mol Dodecanol-1 analog Beispiel 2A).

B) In einem Rührautoklaven (analog Beispiel 1B) werden unter Ausschluß von Luft-Sauerstoff eingesetzt:

| | |
|---|---|
| Entionisiertes Wasser | 10535,0 Gew.-Tle |
| Natriumhydrogencarbonat | 10,0 Gew.-Tle |
| wäßrige, 15 %ige Lösung des gemäß A) hergestellten Emulgators | 1.600,0 Gew.-Tle |
| tert.-Dodecylmercaptan | 37,2 Gew.-Tle |
| Butadien | 12.000,0 Gew.-Tle |

Die Mischung wird unter Rühren mit einem Blattrührer (150 $Umin^{-1}$) auf 70 °C aufgeheizt. Anschließend wird eine wäßrige Initiatorlösung zugegeben, die durch Verrühren von 35,7 Gew.-Tln 4,4-Azo-bis(4-cyanopentansäure) mit 500 Gew.-Tln Wasser und anschließender Zugabe von 116,4 Gew.-Tln 10 %iger Kalilauge hergestellt wurde.

Nach einer Reaktionszeit von 40 Stunden wird ein Latex folgender Teilchengrößenverteilung erhalten:

| Massen (%) | D[nm] |
|---|---|
| 0 | 86 |
| 10 | 124 |
| 20 | 147 |
| 30 | 183 |
| 40 | 221 |
| 50 | 227 |
| 60 | 229 |
| 70 | 236 |
| 80 | 270 |
| 90 | 290 |
| 100 | 350 |

DAN: 169; DAF: 205; DAV: 222, DAV:DAN = 1,3.

Der dünnflüssige Latex ist koagulatfrei, sein Feststoffgehalt beträgt 51 Gew.-%. der pH-Wert 8,5. Die Viskosität beträgt 700 centipoise (Spindel 1; 6 $Umin^{-1}$ im Brookfield Viskotester).

Beispiel 4

Molares Verhältnis von Zitronensäure zu Dodecanol-1 = 1:3.

A) 105 Gew.-Tle Zitronensäurehydrat werden mit 279 Gew.-Tln Dodecanol-1 4 Stunden auf 160 bis 170 °C erhitzt, wobei das entstehende Reaktionswasser abdestilliert. Anschließend wird das Gemisch 1 Stunde im Vakuum (20 mbar) auf 140 °C erhitzt. Man erhält 350 Gew.-Tle eines wachsartigen Rückstandes mit einer Säurezahl von 19 mg KOH/g.

B) Analog Beispiel 1B) werden in einen Autoklaven eingebracht:

| | |
|---|---|
| entionisiertes Wasser | 2.032,0 Gew.-Tle |
| Natriumhydrogencarbonat | 2,7 Gew.-Tle |
| 10 gew.-%ige Kalilauge | 4,4 Gew.-Tle |
| 10 gew.-%ige Emulsion des gemäß 4A) hergestellten Zitronensäure-Emulgators | 547,0 Gew.-Tle |
| tert.-Dodecylmercaptan | 5,7 Gew.-Tle |
| Butadien | 1.830,0 Gew.-Tle |

Nach Erreichen der Reaktionstemperatur von 65 °C werden 170 Gew.-Tle einer 2,5 gew.-%igen Kaliumpersulfatlösung zugegeben. Der pH-Wert wird auf ca. 11,5 gehalten. Nach 85 Stunden erreicht der Latex einen Feststoffgehalt von 37 Gew.-%. Es resultiert folgende Teilchendurchmesserverteilung:

| Massen (%) | D[nm] |
|---|---|
| 0 | 95 |
| 10 | 118 |
| 20 | 170 |
| 30 | 230 |
| 40 | 310 |
| 50 | 340 |
| 60 | 350 |
| 70 | 368 |
| 80 | 390 |
| 90 | 412 |
| 100 | 522 |

DAN: 146; DAF: 246; DAV: 305; DAV:DAN = 2,1.

Beispiel 5

Molares Verhältnis von Zitronensäure zu Octadecanol = 1:2.

A) 105 Gew.-Tle Zitronensäurehydrat werden mit 270 Gew.-Tln Octadecanol-1 4 Stunden auf 160 °C erhitzt, wobei das entstehende Wasser abdestilliert wird.

Anschließend wird das Reaktionsgemisch noch 1 Stunde im Vakuum (20 mbar) auf 140 °C erhitzt.

Man erhält 315 Gew.-Tle einer bei 20 °C wachsartigen Substanz mit einer Säurezahl von 75 mg KOH/g und einer Verseifungszahl von 237 mg KOH/g. Octadecanol war im Reaktionsgemisch dünnschichtchromatographisch nicht mehr nachweisbar.

Der saure Ester wird in gleichen Teilen Isopropanol gelöst und mit 45 %iger Natronlauge neutralisiert. Anschließend wird das Reaktionsgemisch im Vakuum (20 mbar) bei 50 °C bis zur Gewichtskonstanz eingedampft. Aus dem Rückstand wird eine 10 %ige wäßrige Emulsion hergestellt.

B) Analog Beispiel 1B) wird die dort beschriebene Mischung, jedoch unter Verwendung von 547,0 Gew.-Tln der unter 5A) hergestellten Emulsion, polymerisiert. Es resultiert nach 30 Stunden Reaktionszeit ein 37 %iger Latex mit folgender Teilchendurchmesserverteilung:

| Massen (%) | D[nm] |
|---|---|
| 0 | 142 |
| 10 | 157 |
| 20 | 163 |
| 30 | 167 |
| 40 | 170 |
| 50 | 173 |
| 60 | 175 |
| 70 | 179 |
| 80 | 185 |
| 90 | 245 |
| 100 | 885 |

DAN: 173; DAF: 183; DAV: 201; DAV:DAN = 1,16.

Beispiel 6

Molares Verhältnis von Zitronensäure zu Cyclohexanol = 1:2.

A) 105 Gew.-Tle Zitronensäurehydrat werden mit 100 Gew.-Tln Cyclohexanol 4 Stunden auf 160 bis 170 °C erhitzt, wobei das Reaktionswasser abdestilliert. Anschließend wird das Reaktionsgemisch 1 Stunde im Vakuum (20 mbar) auf 140 °C erhitzt.

Das ölige Reaktionsgemisch besitzt eine Säurezahl von 245 mg KOH/g und eine Verseifungszahl von 508 mg KOH/g. Es wird in Isopropanol gelöst und mit 45 %iger Natronlauge neutralisiert, wonach das Gemisch im Vakuum (20 mbar) bei 50 °C bis zur Gewichtskonstanz eingedampft wird. Aus dem Rückstand wird eine 10 %ige wäßrige Lösung hergestellt.

B) Unter Verwendung der 10 %igen Losung des unter 6A) hergestellten Emulgators wird analog Beispiel 1B) polymerisiert. Nach 80 Stunden Polymerisationszeit resultiert ein 37 %iger Latex mit folgender Teilchendurchmesserverteilung

| Massen (%) | D[nm] |
|---|---|
| 0 | 256 |
| 10 | 257 |
| 20 | 264 |
| 30 | 271 |
| 40 | 283 |
| 50 | 300 |
| 60 | 325 |
| 70 | 351 |
| 80 | 381 |
| 90 | 461 |
| 100 | 644 |

DAN: 304 nm; DAF: 328 nm; DAV: 347 nm; DAV/DAN = 1,14

Der Latex ist als Pfropfgrundlage zur Herstellung von ABS vorzüglich geeignet.

Beispiel 7

Molares Verhältnis von Zitronensäure zu Hexadecanol-1 = 1:2.

A) 105 Gew.-Tle Zitronensäurehydrat werden mit 242 Gew.-Tln Hexadecanol-1 4 Stunden auf 160 bis 170° C erhitzt, wobei das Reaktionswasser abdestilliert. Anschließend wird das Reaktionsgemisch noch 1 Stunde im Vakuum (20 mbar) auf 140° C erhitzt.

Das Reaktionsprodukt besitzt eine Säurezahl von 88 mg KOH/g und eine Verseifungszahl von 260 mg KOH/g. Es wird als Schmelze in Isopropanol 1:1 gelöst, mit 45 %iger Natronlauge neutralisiert, wonach das Gemisch im Vakuum zur Trockne eingedampft wird. Der trockene Rückstand wird mit Wasser zu einer 10 %igen Emulsion angerührt.

B) Unter Verwendung der unter 7A) hergestellten 10 %igen Emulsion wird analog Beispiel 1B) polymerisiert. Es resultiert nach 45 h ein 35 %iger Latex mit folgender Teilchendurchmesserverteilung:

| Massen (%) | D [nm] |
|---|---|
| 0 | 80 |
| 10 | 111 |
| 20 | 175 |
| 30 | 181 |
| 40 | 183 |
| 50 | 184 |
| 60 | 185 |
| 70 | 187 |
| 80 | 192 |
| 90 | 204 |
| 100 | 238 |

DAN: 149; DAF: 173; DAV: 180; DAV/DAN = 1,2

Beispiel 8

Molares Verhältnis von Zitronensäure zu Octanol-1 = 1:2.

A) 105 Gew.-Tle Zitronensäurehydrat, 400 Gew.-Tle Toluol, 130 Gew.-Tle Octanol-1 und 0,5 Gew.-Tle p-Toluolsulfonsäure werden am Wasserabscheider unter Rühren erhitzt, bis kein Wasser mehr ausgekreist werden kann. Das Reaktionsgemisch wird bei 50 °C im Vakuum (20 mbar) eingeengt, bis kein Toluol mehr übergeht. Das zurückbleibende Öl wird mit 500 Gew.-Tln Wasser verrührt und mit 20 %iger Kalilauge auf pH = 8 und einen Feststoffgehalt von 10 Gew.-% eingestellt. Es resultiert eine Emulsion.

B) Unter Verwendung der unter 8A) hergestellten Emulgatoremulsion wird analog Beispiel 1B) polymerisiert. Es resultiert nach 23 h ein 40 %iger Latex mit folgender Teilchendurchmesserverteilung:

| Massen (%) | D [nm] |
|---|---|
| 0 | 72 |
| 10 | 85 |
| 20 | 117 |
| 30 | 157 |
| 40 | 162 |
| 50 | 165 |
| 60 | 168 |
| 70 | 171 |
| 80 | 173 |
| 90 | 177 |
| 100 | 202 |

DAN: 117; DAF: 144; DAV: 154; DAV:DAN = 1,3.

Beispiel 9

A) 327 Gew.-Tle Zitronensäurehydrat werden fein pulverisiert, auf ein emailliertes Blech ausgebreitet und 26 h im Vakuumtrockenschrank (10 Torr) bei 115 °C über wasserfreiem Calciumchlorid getrocknet. Der Gewichtsverlust beträgt nach 3 Stunden 27 Gew.-Tle, nach 26 Stunden 29 Gew.-Tle.
298 Gew.-Tle dieser wasserfreien Zitronensäure werden pulverisiert und mit 317 Gew.-Tln Essigsäureanhydrid und 0,1 Gew.-Tln p-Toluolsulfonsäure unter Rühren auf 50 °C erwärmt. Nach 15 Minuten ist eine klare Lösung entstanden, die 1 Stunde bei 80 °C gehalten wird. Anschließend wird die Lösung zunächst im Wasserstrahlvakuum, danach im Ölpumpenvakuum (2 Torr) bei 50 °C eingeengt.
Es hinterbleiben 335 Gew.-Tle eines durchsichtigglasigen, leicht gebräunten Rückstandes. Dieses rohe O-Acetylzitronensäureanhydrid wird ohne weitere Reinigung direkt mit Alkoholen umgesetzt. Zum Beispiel werden 110 Gew.-Tle rohes O-Acetylzitronensäureanhydrid mit 110 Gew.-Tln Tetradecanol-1 (Myristylalkohol) unter Rühren auf 90 °C erwärmt. Nach Eintreten einer exothermen Reaktion, die durch Zugabe katalytischer Mengen eines tertiären Amins beschleunigt werden kann, kühlt man die klare Schmelze aus 80 °C ab und rührt 6 Stunden nach.
Die Schmelze wird noch heiß auf ein emailliertes Blech oder in eine Polyethylenwanne gegossen, wo sie beim Abkühlen zu einem Kristallbrei erstarrt. 43 Gew.-Tle des rohen O-Acetylzitronensäuremonotetradecylethers werden mit 11 Gew.-Tln Kaliumhydroxid in 484 Gew.-Tln Wasser gelöst.
B) Unter Verwendung einer 10 %igen Lösung des gemäß Beispiel 9A) hergestellten Emulgators wird analog Beispiel 1B) polymerisiert. Es resultiert nach einer Polymerisationszeit von 15 Stunden koagulatfreier 40 %iger Latex mit einem mittleren Teilchendurchmesser von 70 nm.

Beispiel 10 (Vergleichsbeispiel)

45,7 Gew.-Tle einer handelsüblichen Dimersäure (®EMPOL 1014 oder ®EMPOL 1010, UNILEVER EMERY N.V. Gouda, Holland) werden mit 10,6 Gew.-Tln 85 %iger Kalilauge und 490 gew.-Tln Wasser verrührt und gelöst und anschließend mit 2030 Gew.-Tln Wasser verdünnt.

In dieser Emulgatorlösung werden 5,7 Gew.-Tle tert.-Dodecylmercaptan emulgiert, die Emulsion in einen Edelstahlautoklav gemäß Beispiel 1B) eingefüllt, und analog Beispiel 1B) werden 1830 Gew.-Tle Butadien eingedrückt und mit 150 Gew.-Tln einer 2,5 %igen Kaliumpersulfatlösung die Emulsionspolymerisation bei 65 °C durchgeführt.

Es resultiert nach 12 h ein koagulatfreier 40 %iger Latex mit folgender Teilchengrößenverteilung:

| Massen (%) | D (nm) |
|---|---|
| 0 | 33 |
| 10 | 39 |
| 20 | 45 |
| 30 | 50 |
| 40 | 55 |
| 50 | 60 |
| 60 | 65 |
| 70 | 72 |
| 80 | 80 |
| 90 | 86 |
| 100 | 1197 |

DAN: 50 nm; DAF: 58 nm; DAV: 66 nm; DAV:DAN = 1,3

Der Vergleichsversuch beweist, daß der mit Hilfe von Dimersäuren hergestellte Polybutadienlatex nicht als "besonders grobteilig" bezeichnet werden kann. Wird die Emulgatormenge drastisch auf den sechsten

Teil der oben verwendeten Menge reduziert, so entsteht ein Latex mit 42 Gew.-Tln Koagulat. Nach dem Absieben des Koagulats stellt man die folgende Teilchengrößenverteilung fest:

| Massen (%) | D [nm] |
|---|---|
| 0 | 51 |
| 10 | 61 |
| 20 | 66 |
| 30 | 70 |
| 40 | 74 |
| 50 | 77 |
| 60 | 81 |
| 70 | 86 |
| 80 | 91 |
| 90 | 99 |
| 100 | 1300 |

DAN: 73 nm; DAF: 78 nm; DAV: 86 nm; DAV:DAN = 1,2.

Trotz der erheblichen Reduzierung der Emulgatormenge liegt die mittlere Teilchengröße noch weit unterhalb der mit Hilfe der erfindungsgemäßen Emulgatoren erreichten und ist allenfalls mit jener der Umsetzungsprodukte von 1 Mol Zitronensäure mit 1 Mol eines langkettigen unverzweigten Alkohols zu vergleichen.

## Patentansprüche

1. Verfahren zur Herstellung von Polymerisatdispersionen mit Teilchendurchmessern von 50 bis 1000 nm, dadurch gekennzeichnet, daß als Emulgatoren bei der Emulsionspolymerisation Zitronensäurederivate der allgemeinen Formel (I)

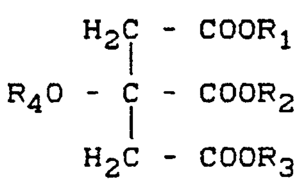

(I)

mit

$R_1$, $R_2$, $R_3$: $C_6$.$C_{20}$-Alkyl, Wasserstoff, Natrium, Kalium, Lithium, Ammonium, mindestens einer der Reste $R_1$, $R_2$, $R_3$ aber $C_6$-$C_{20}$-Alkyl

$R_4$: Wasserstoff, Acetyl

verwendet werden

und wasserlösliche Radikalbildner oder Redox-Systeme mit zumindest einer wasserlöslichen Komponente als Initiatoren.

2. Verwendung von Zitronensäurederivaten der Formel gemäß Anspruch 1 als Emulgatoren für die Emulsionspolymerisation radikalisch polymerisierbarer Verbindungen.

## Claims

1. A process for the production of polymer dispersions having particle diameters of 50 to 1,000 nm, characterized in that citric acid derivatives corresponding to general formula (I)

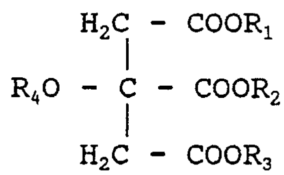

(I)

in which

$R_1$, $R_2$ and $R_3$ represent $C_{6-20}$ alkyl, hydrogen, sodium, potassium, lithium, ammonium, at least one of the substituents $R_1$, $R_2$, $R_3$ representing $C_{6-20}$ alkyl,

$R_4$ represents hydrogen, acetyl

are used as emulsifiers and water-soluble radical formers or redox systems containing at least one water-soluble component as initiators in the emulsion polymerization reaction.

2. The use of citric acid derivatives corresponding to the formula in claim 1 as emulsifiers for the emulsion polymerization of radical-polymerizable compounds.

**Revendications**

1. Procédé de préparation de dispersions de polymères à des diamètres de particules de 50 à 1 000 nm, caractérisé en ce que l'on utilise en tant qu'agents émulsionnants, à la polymérisation en émulsion, des dérivés de l'acide citrique de formule générale I

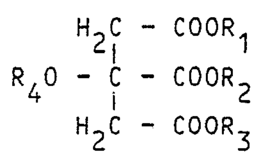

(I)

dans laquelle

$R_1$, $R_2$, $R_3$ représentent des groupes alkyle en $C_6$-$C_{20}$, l'hydrogène, le sodium, le potassium, le lithium, l'ammonium, au moins un des symboles $R_1$, $R_2$, $R_3$ devant représenter un groupe alkyle en $C_6$-$C_{20}$, $R_4$ représente l'hydrogène ou un groupe acétyle,

et en tant qu'inducteurs des inducteurs radicalaires solubles dans l'eau ou des systèmes redox à au moins un composant soluble dans l'eau.

2. Utilisation des dérivés de l'acide citrique de formule I de la revendication 1 en tant qu'agents émulsionnants à la polymérisation en émulsion des composés aptes à une polymérisation radicalaire.